# EUROPÄISCHE PATENTSCHRIFT

(11) **EP 2 577 017 B1**
(45) Veröffentlichungstag und Bekanntmachung des Hinweises auf die Patenterteilung: **23.07.2014**
(21) Anmeldenummer: 11717583.6
(22) Anmeldetag: 28.04.2011
(51) Int. Cl.: F01P 9/02, F02B 29/04, G01M 15/02

(54) **VORRICHTUNG ZUR VERSORGUNG EINES VERBRENNUNGSMOTORS AUF EINEM PRÜFSTAND MIT ZUMINDEST EINEM GEKÜHLTEN NUTZMEDIUM**
DEVICE FOR SUPPLYING AN INTERNAL COMBUSTION ENGINE ON A TEST BENCH WITH AT LEAST ONE COOLED USEFUL MEDIUM
DISPOSITIF PERMETTANT D'ALIMENTER UN MOTEUR À COMBUSTION INTERNE SUR UN BANC D'ESSAI AVEC AU MOINS UN FLUIDE D'EXPLOITATION REFROIDI

(30) Priorität: 02.06.2010 AT 9092010
(43) Veröffentlichungstag der Anmeldung: 10.04.2013
(73) Patentinhaber: AVL List GmbH, 8020 Graz (AT)
(72) Erfinder: SKAZEDONIG, Johannes, A-8454 Arnfels (AT); LEITHGÖB, Rainer, A-8010 Graz (AT)
(74) Vertreter: Weiss, Christian
(86) Internationale Anmeldenummer: PCT/EP2011/056692
(87) Internationale Veröffentlichungsnummer: WO 2011/151115

(56) Entgegenhaltungen:
- DE-A1- 2 446 490
- DE-A1- 19 637 926
- JP-A- 7 189 707
- US-A- 1 854 607

## Beschreibung

Die Erfindung betrifft eine Vorrichtung zur Versorgung eines Verbrennungsmotors auf einem Prüfstand mit zumindest einem gekühlten Nutzmedium, beispielsweise Verbrennungsluft, Motoröl, Kühlwasser, etc., umfassend zumindest einen dem Verbrennungsmotor vorgeschalteten Kühler für das jeweilige Nutzmedium.

Auf Prüfständen ist die Anforderung gegeben, Ladeluft für den am Prüfstand befindlichen Verbrennungsmotor zu konditionieren, insbesondere zu kühlen. Dazu kamen oftmals durch mit Kühlwasser geflutete Kästen laufende Rohrleitungen zum Einsatz, bei welchen der Wasserstand zur Einstellung der Kühlleistung geregelt wurde.

Auf anderen Gebieten der Technik ist die Kühlung von gasförmigen Medien mittels flüssiger Kühlmittel auf verschiedene Art realisiert worden. In der US2005/0193763 A1 ist beispielsweise ein System für wassergeschmierte Kompressoren beschrieben, bei welchem Wasser nach einem ersten Kompressor mittels Düsen direkt in einen zu kühlenden Gasstrom eingesprüht wird, so dass ein Gas-Wasser-Gemisch entsteht. Über die Regelung der Wasserdurchflussmenge und Tropfengröße wird die Gastemperatur geregelt. Damit ist aber eine für Verbrennungsmotoren im Allgemeinen nicht erwünschte Erhöhung der Feuchte der Ladeluft verbunden. Der Kühler arbeitet mit Sprühdüsen.

In der GB 713131 A sind eine Methode und eine Apparatur zum Kühlen und Konditionieren der einem Motor mit Abgasturbolader zugeführten Luft beschrieben. Dazu wird ein Ladeluftkühler zwischen Lader und Saugrohr installiert, wobei die Luft vor dem Eintritt in den Abgasturbolader gekühlt wird, in dem Wasser durch mehrere Düsen auf ein Luftleitblech gesprüht wird. Die Wassermenge wird dabei über ein durchflussgeregeltes Ventil gesteuert. Die angesaugte Luft strömt über diese Leitbleche und wird durch Verdampfung des eingesprühten Wassers gekühlt, gleichzeitig aber auch befeuchtet. Danach strömt die Luft weiter durch das Aufladegebläse und einen Wärmetauscher, welcher von Wasser durchströmt wird, das zuvor über die Düsen in die Verdampfereinheit eingebracht wurde. Die KR 100251169 B offenbart eine Apparatur zur Verbesserung der Kühlleistung eines Ladeluftkühlers, bei welcher Wasser aus einem Wassertank mit Hilfe einer Pumpe angesaugt und direkt über Düsen auf die Kühleroberfläche gesprüht wird. Die Wassermenge ist allein durch die Pumpe vorgegeben und damit nicht regelbar. Gleiches zeigt die DE 196 37 926 A1.

In der JP 2009035206 A ist eine Anordnung zur Verwendung in Bussen beschrieben, wobei mit Hilfe eines Kühlsystems der Umgebungsluft das Wasser entzogen wird. Bei dieser Anwendung für Ladeluft-, Öl- und Wasserkühler, wird das Wasser mittels Sprühdüsen auf die Kühler gesprüht, wofür es kann mittels Pumpe oder mittels "Wasserfalls" zum Kühler befördert wird.

Gemäß der JP 7010431 U wird mittels Ultraschall das Wasser in einem Wassertank des Fahrzeuges aufgewirbelt. Durch den Fahrtwind, welcher über eine Hutze in der Motorhaube in den Motorraum gelangt, werden die Wassertropfen mitgerissen und ohne Regelung der Menge am Ladeluftkühler vorbei geführt, um eine Kühlung der Ladeluft zu bewirken. Das Wasser wird von der Klimaanlage bezogen.

Die Aufgabe der vorliegenden Erfindung war eine Vorrichtung, mit welcher eine rasch und der geforderten Kühlleistung anpassbare Kühlung von vorzugsweise gasförmigen Nutzmedien, insbesondere der Ladeluft von Verbrennungsmotoren auf Prüfständen, ohne Veränderung des Feuchtegehalts des Nutzmediums bewerkstelligt werden kann.

Zur Lösung dieser Aufgabe ist die eingangs charakterisierte Vorrichtung dadurch gekennzeichnet, dass der Kühler als Wärmetauscher mit zumindest einer abgeschlossenen und vollkommen getrennt von allen anderen Medien geführten Leitung für das Nutzmedium ausgeführt ist und zumindest zwei unabhängig ansteuerbare Sprühköpfe für das Kühlmedium auf die Leitung für das Nutzmedium aufweist. Über die unabhängig ansteuerbaren Sprühköpfe kann erforderliche Kühlleistung rasch und genau geregelt werden, und durch die physische Trennung von Nutz- und Kühlmedium kommt es auch zu keinerlei unerwünschter Veränderung anderer Eigenschaften als der Temperatur, insbesondere zu keiner Veränderung des Feuchtegehalt des Nutzmediums.

Gemäß einer vorteilhaften Ausführungsform ist vorgesehen, dass zumindest zwei Sprühköpfe zu einer separat ansteuerbaren Sprühkopfgruppe zusammengefasst sind.

Vorzugweise kann auch eine Ausführungsform vorgesehen sein, bei welcher zumindest zwei unabhängig regelbare Versorgungsleitungen für das Kühlmedium mit zumindest je einem angeschlossenen Sprühkopf vorgesehen sind.

Bei einer derartigen Ausführungsform ist es oftmals vorteilhaft, wenn zumindest zwei Versorgungsleitungen in einer gemeinsam ansteuerbaren Gruppe von Versorgungsleitungen zusammengefasst sind.

Dabei können zumindest zwei Versorgungsleitungen mit jeweils zumindest einer Durchflussregeleinrichtung versehen sein, und zumindest zwei Durchflussregeleinrichtungen in einer gemeinsam ansteuerbaren Gruppe von Durchflussregeleinrichtungen zusammengefasst sein.

Eine erfindungsgemäße Vorrichtung kann gemäß einem weiteren Ausführungsbeispiel auch dadurch gekennzeichnet sein, dass zumindest zwei Versorgungsleitungen für das Kühlmedium mit zumindest je einem angeschlossenen Sprühkopf vorgesehen sind, wobei jeder Sprühkopf mit einer Durchflussregeleinrichtung für das Kühlmedium versehen ist.

Für eine Regelung der Kühlleistung durch Veränderung der Menge des ein- bzw. aufgebrachten Kühlmediums können analog regelbare Durchflussregeleinrichtungen vorgesehen sein.

Für eine exakt regelbare Kühlleistung ist vorzugsweise eine Vorrichtung vorgesehen, bei welcher getaktet arbeitende Ventile, vorzugsweise Magnetventile, als Durchflussregeleinrichtung, vorzugsweise in den Versorgungsleitungen, vorgesehen sind.

Vorzugsweise zweigen bei der erfindungsgemäßen Vorrichtung alle Versorgungsleitungen von einem gemeinsamen Anschluss für das Kühlmedium ab.

Um eine exakt an die Anforderungen des zu kühlenden Systems, insbesondere des am Prüfstand befindlichen Verbrennungsmotors, anpassbare Kühlleistung zu gewährleisten, kann gemäß einer vorteilhaften Ausführungsform der Erfindung ein Sensor für die Temperatur des den Kühler verlassenden Mediums vorgesehen und mit einer Regeleinrichtung für eine Sollwertregelung verbunden sein, welche die Menge des über die Sprüheinrichtungen abgegebenen Kühlmediums steuert. Damit ist eine Sollwert-Regelung für die Temperatur beispielsweise der Ladeluft für Motoren gewährleistet, nicht nur eine herkömmliche Kühlung, bei welcher die Temperatur des Nutzmediums so niedrig wie möglich gehalten wird.

Dabei ist vorzugsweise in der Regeleinrichtung ein Ablauf implementiert, der nacheinander die Sprühköpfe bzw. Sprühkopfgruppen aufschaltet, vorzugsweise beginnend mit dem dem Austritt des Nutzmediums aus dem Kühlers nächstliegenden Sprühkopf und in Richtung des dem Eintritt des Nutzmediums in den Kühler nächstliegenden Sprühkopfes fortschreitend.

Um dabei einen sehr großen Bereich an verfügbarer Kühlleistung abzudecken, sind vorteilhafterweise zumindest zwei Sprühköpfe oder Sprühkopfgruppen mit unterschiedlicher maximaler Durchflussmenge vorgesehen und werden diese im Sinn steigender maximaler Durchflussmenge zugeschaltet.

Für eine exakte Regelung ist dabei vorgesehen, dass in der Regeleinrichtung eine der benötigten Kühlleistung entsprechende Spannung generiert wird, wobei jeder der Sprühköpfe bzw. Sprühkopfgruppen in einem bestimmten Spannungsintervall anspricht, in welchem die Durchflussregeleinrichtung dieses Sprühkopfes bzw. dieser Sprühkopfgruppe den Durchfluss proportional der Spannung einstellt.

Gemäß einer bevorzugten Konstruktionsart der erfindungsgemäßen Vorrichtung ist vorgesehen, dass der Wärmetauscher als Ladeluftkühler zwischen einem allfälligen Verdichter für die Verbrennungsluft einer Verbrennungskraftmaschine, beispielsweise einem Abgasturbolader, und der Verbrennungskraftmaschine angeordnet ist.

In der nachfolgenden Beschreibung soll die Erfindung anhand der beigefügten Zeichnungen näher erläutert werden.

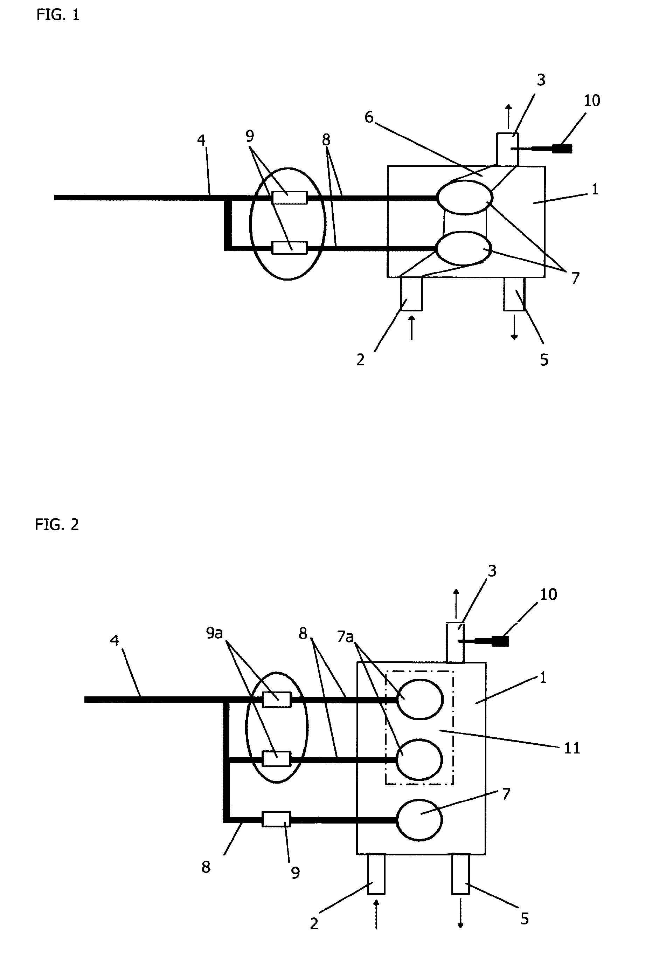

Dabei zeigen die Fig. 1 bis 8 jeweils schematische Darstellungen einer erfindungsgemäßen Vorrichtung in unterschiedlichen Ausführungsformen.

Um beispielsweise einen auf einem Prüfstand befindlichen Verbrennungsmotor mit einem gekühlten Nutzmedium zu versorgen, ist in der Zuleitung für das Nutzmedium zum Motor ein Kühler 1 eingesetzt. So kann etwa die Verbrennungsluft für den Motor, allenfalls auch zwischen einem Turbolader und dem Motor, auf eine gewünschte Temperatur gebracht werden. Der Kühler 1 ist mit einem Einlass 2 und einem Auslass 3 für das Nutzmedium versehen und weist eine Zuleitung 4 und einen Auslass 5 für das Kühlmedium, vorzugsweise Wasser, auf.

Der Kühler 1 selbst ist als Wärmetauscher mit zumindest einer abgeschlossenen und vollkommen getrennt von allen anderen Medien geführten Leitung 6 für das Nutzmedium ausgeführt und weist in der einfachen Ausführungsform der Fig. 1 zwei Sprühköpfe 7 für das Kühlmedium auf die Leitung 6 für das Nutzmedium auf. Aufgrund der vollkommenen physischen Trennung von Nutz- und Kühlmedium kann jegliche unerwünscht Veränderung des Nutzmediums durch das Kühlmedium, insbesondere eine Veränderung des Feuchtegehaltes, vermieden werden.

Um eine unabhängige Ansteuerung der beiden Sprühköpfe 7 zu erzielen, so dass die erforderliche Kühlleistung rasch und genau den Anforderungen entsprechend geregelt werden kann, verzweigt sich die Zuleitung 4 für das Kühlmedium in zwei Zweigleitungen 8, von welchen jeweils eine zu einem der beiden Sprühköpfe 7 führt. In jeder Zweigleitung 8 ist eine eigene Durchflussregeleinrichtung 9 eingesetzt und unabhängig von der anderen Durchflussregeleinrichtung 9 ansteuerbar ausgeführt. Es können sowohl analog regelbare Durchflussregeleinrichtungen 9 als auch getaktet arbeitende Ventile, vorzugsweise Magnetventile, als Durchflussregeleinrichtung 9 eingesetzt werden.

Vorteilhafterweise ist ein Sensor 10 für die Temperatur des den Kühler 1 verlassenden Nutzmediums am Auslass 3 vorgesehen und mit einer (nicht dargestellten) Regeleinrichtung für eine Sollwertregelung verbunden, welche die Menge des über die Sprühköpfe 7 abgegebenen Kühlmediums steuert. Damit kann eine genaue und exakt den Anforderungen und Vorgaben entsprechende Kühlleistung mit einer Sollwert-Regelung für die Temperatur des Nutzmediums gewährleistet werden.

Die Regeleinrichtung ist vorzugsweise derart ausgelegt, dass eine der benötigten Kühlleistung entsprechende Spannung generiert wird, wobei jeder der Sprühköpfe 7 bzw. Sprühkopfgruppen 11 in einem bestimmten Spannungsintervall anspricht, in welchem die Durchflussregeleinrichtung 9, 9a dieses Sprühkopfes 7 bzw. dieser Sprühkopfgruppe 11 den Durchfluss proportional der Spannung einstellt. In der Regeleinrichtung ist auch vorzugsweise ein Ablauf implementiert, der nacheinander die Sprühköpfe 7 aufschaltet, vorzugsweise beginnend mit dem dem Austritt 3 des Nutzmediums aus dem Kühler 1 nächstliegenden Sprühkopf 7 und in Richtung des dem Eintritt 2 des Nutzmediums in den Kühler 1 nächstliegenden Sprühkopfes 7 fortschreitend. Vorteilhafterweise sind dabei Sprühköpfe 7 mit unterschiedlicher maximaler Durchflussmenge vorgesehen oder wird die maximale Durchflussmenge durch die Durchflussregeleinrichtungen 9 für jeden Sprühkopf 7 unterschiedlich definiert. Die Sprühköpfe 7 werden vorzugsweise im Sinn insgesamt mit jeder Stufe steigender maximaler Durchflussmenge zugeschaltet.

Wie in Fig. 2 anhand einer einfachen Ausführungsform dargestellt ist, können mehrere Sprühköpfe 7a auch zu einer gemeinsam ansteuerbaren Sprühkopfgruppe 11 zusammengefasst sein, die unabhängig von allen anderen Sprühköpfen 7 oder anderen Sprühkopfgruppen 7a angesteuert werden kann. Wie bei der Ausführungsform der Fig. 1 führt je eine Zweigleitung 8 zu je einem der Sprühköpfe 7, 7a, wobei wiederum in jeder der Zweigleitungen 8 eine ansteuerbare Durchflussregeleinrichtung 9, 9a vorgesehen ist. Die Zusammenfassung der Sprühköpfe 7a zu einer gemeinsam ansteuerbaren Sprühkopfgruppe 11 wird in diesem Fall über ein gemeinsames Steuersignal an die beiden Durchflussregeleinrichtungen 9a bewerkstelligt, welches unabhängig vom Steuersignal an die dritte Durchflussregeleinrichtung 9 ist und die zwei Versorgungsleitungen 8 zu den Sprühköpfen 7a in einer gemeinsam ansteuerbaren Gruppe von Versorgungsleitungen zusammenfasst.

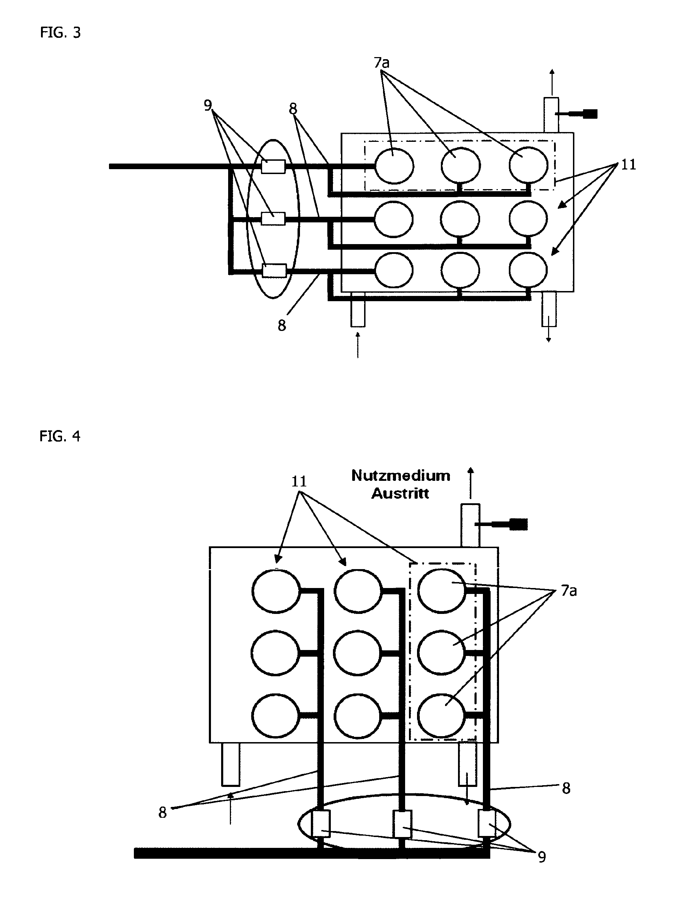

Fig. 3 zeigt ein Ausführungsbeispiel mit drei Zweigleitungen 8, die zu je einer Sprühkopfgruppe 11 mit jeweils wieder drei einzelnen Sprühköpfen 7a führen und sich weiter zu diesen Sprühköpfen 7a hin verzweigen. Die Zusammenfassung zu den Sprühkopfgruppen 11 wird hier durch die Verbindung mit der gleichen Zweigleitung 8 bewerkstelligt, wobei die Durchflussregeleinrichtung 9 jeder der Zweigleitungen 8 unabhängig von jeder anderen Zweigleitung 8 ansteuerbar ist. Auch bei der Ausführungsform der Fig. 4 ist eine gleichartige Zusammenfassung von jeweils drei Sprühköpfen 7a in drei Sprühkopfgruppen 11 dargestellt, wobei hier aber eine andere geometrische Anordnung im Kühler 1 vorliegt.

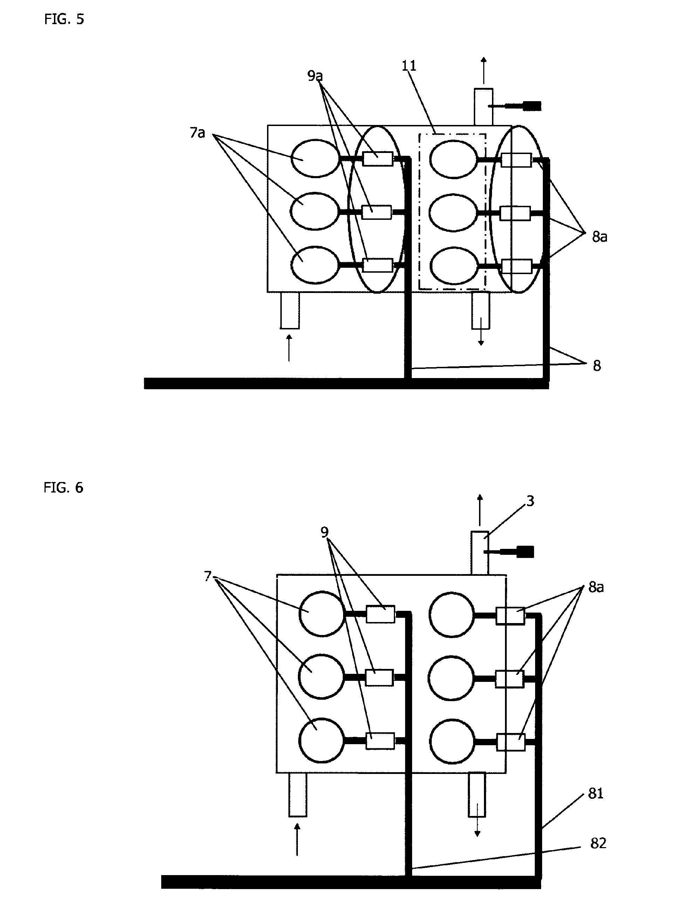

Bei der Ausführungsform der Fig. 5 ist die Zusammenfassung von Sprühköpfen 7a zu gemeinsam ansteuerbaren Sprühkopfgruppen 11 wieder etwas anders realisiert. Hier zweigen von jeder der beiden Zweigleitungen 8, die zu jeweils drei Sprühköpfen 7a führen, jeweils wieder drei einzelne Zuleitungen 8a zu den einzelnen Sprühköpfen 7a ab. Die Durchflussregeleinrichtungen 9a befinden sich nun aber in den einzelnen Zuleitungen 8a. Um nun jeweils drei Sprühköpfe 7a zu einer gemeinsam ansteuerbaren Sprühkopfgruppe 11 zusammenzufassen, werden vorzugsweise die Durchflussregeleinrichtungen 9a der jeweils drei von der selben Zweigleitung 8 kommenden Zuleitungen 8a mit einem gemeinsamen Steuersignal beaufschlagt, das unabhängig vom Steuersignal der anderen Dreiergruppe von Zuleitungen 8a ist.

Prinzipiell kann natürlich aber auch jeder Sprühkopf 7 im Kühler 1, selbst wieder jeweils drei einzelne Zuleitungen 8a abzweigend von zwei Zweigleitungen 8 vorgesehen sind, separat und unabhängig von jedem anderen Sprühkopf 7 angesteuert werden. Diese Variante ist in Fig. 6 dargestellt. Vorzugsweise werden die einzelnen Sprühköpfe 7 jedoch nacheinander zugeschaltet, um eine immer höhere Kühlleistung zu erzielen. Dabei werden vorzugsweise nacheinander die Sprühköpfe 7 der ersten Zweigleitung 81, anschließend jene der zweiten Zweigleitung 82 zugeschaltet, wobei bevorzugt jene Zweigleitung 81 zuerst zugeschaltet wird, deren Sprühköpfe 7 dem Austritt 3 für das Nutzmedium näher liegen.

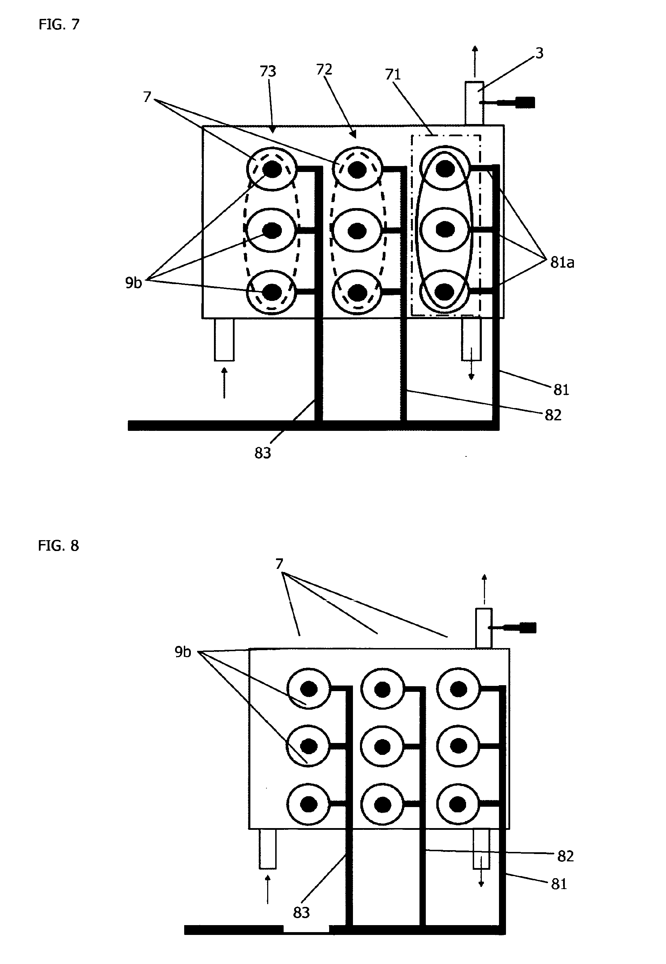

Wie in Fig. 7 gezeigt, können von einer Zuleitung 4 für das Kühlmedium Zweigleitungen 81, 82, 83 abzweigen, von welchen dann wieder Zuleitungen z.B. 81a zu jeweils einem Sprühkopf 7 verlaufen. Anstelle von Durchflussregeleinrichtungen 9, 9a in den Zweigleitungen 8 oder Zuleitungen 8a, 81a vorzusehen sind nun die Sprühköpfe 7 selbst mit solchen Durchflussregeleinrichtungen, vorzugsweise mit analog regelbaren Vorrichtungen 9b, versehen. Vorzugsweise werden, wie in Fig. 7 auch symbolisch dargestellt ist, alle von einer gemeinsamen Zweigleitung 81, 82, 83 versorgten Sprühköpfe 7 mit einem gemeinsamen Steuersignal angesteuert, so dass sie dadurch zu einer gemeinsam ansteuerbaren Sprühkopfgruppe 71, 72 und 73 zusammengefasst sind.

Auch bei den Ausführungsformen mit Durchflussregeleinrichtung 9b im Sprühkopf 7 selbst können allenfalls, was in Fig. 8 an einem Beispiel gezeigt ist, die einzelnen Sprühköpfe 7 nacheinander zugeschaltet werden. Wieder ist vorzugsweise vorgesehen nacheinander die Sprühköpfe 71, 72 bzw. 73 jeweils ein und derselben Zweigleitung 81, 82, 83 aufzuschalten, bevor auf eine nächste Zweigleitung übergegangen wird, wobei bevorzugt jene Zweigleitung 81 zuerst zugeschaltet wird, deren Sprühköpfe 7 dem Austritt 3 für das Nutzmedium näher liegen. Natürlich könnte auch hier aber jeder Sprühkopf 7 separat und unabhängig von jedem anderen Sprühkopf 7 angesteuert werden.

## Patentansprüche

1. Vorrichtung zur Versorgung eines Verbrennungsmotors auf einem Prüfstand mit zumindest einem gekühlten Nutzmedium, beispielsweise Verbrennungsluft, Motoröl, Kühlwasser, etc., umfassend zumindest einen dem Verbrennungsmotor vorgeschalteten Kühler (1) für das jeweilige Nutzmedium, **dadurch gekennzeichnet, dass** der Kühler (1) als Wärmetauscher mit zumindest einer abgeschlossenen und vollkommen getrennt von allen anderen Medien geführten Leitung (6) für das Nutzmedium ausgeführt ist und zumindest zwei unabhängig ansteuerbare Sprühköpfe (7, 7a) für das Kühlmedium auf die Leitung (6) für das Nutzmedium aufweist.

2. Vorrichtung nach Anspruch 1, **dadurch gekennzeichnet, dass** zumindest zwei Sprühköpfe (7a) zu einer separat ansteuerbaren Sprühkopfgruppe (11) zusammengefasst sind.

3. Vorrichtung nach Anspruch 1 oder 2, **dadurch gekennzeichnet, dass** zumindest zwei unabhängig regelbare Versorgungsleitungen (8, 81, 82, 83) für das Kühlmedium mit zumindest je einem angeschlossenen Sprühkopf (7, 7a) vorgesehen sind.

4. Vorrichtung nach Anspruch 3, **dadurch gekennzeichnet, dass** zumindest zwei Versorgungsleitungen (8) in einer gemeinsam ansteuerbaren Gruppe von Versorgungsleitungen zusammengefasst sind.

5. Vorrichtung nach Anspruch 4, **dadurch gekennzeichnet, dass** zumindest zwei Versorgungsleitungen (8) mit jeweils zumindest einer Durchflussregeleinrichtung (9) versehen sind, und dass zumindest zwei Durchflussregeleinrichtungen (9a) in einer gemeinsam ansteuerbaren Gruppe von Durchflussregeleinrichtungen zusammengefasst sind.

6. Vorrichtung nach einem der Ansprüche 1 oder 2, **dadurch gekennzeichnet, dass** zumindest zwei Versorgungsleitungen (8) für das Kühlmedium mit zumindest je einem angeschlossenen Sprühkopf (7) vorgesehen sind, wobei jeder Sprühkopf mit einer Durchflussregeleinrichtung (9b) für das Kühlmedium versehen ist.

7. Vorrichtung nach Anspruch 5 oder 6, **dadurch gekennzeichnet, dass** analog regelbare Durchflussregeleinrichtungen (9b) vorgesehen sind.

8. Vorrichtung nach einem der Ansprüche 5 bis 7, **dadurch gekennzeichnet, dass** getaktet arbeitende Ventile, vorzugsweise Magnetventile, als Durchflussregeleinrichtung (9), vorzugsweise in den Versorgungsleitungen (8), vorgesehen sind.

9. Vorrichtung nach einem der Ansprüche 1 bis 8, **dadurch gekennzeichnet, dass** alle Versorgungsleitungen (8, 81, 82, 83) von einem gemeinsamen Anschluss (4) für das Kühlmedium abzweigen.

10. Vorrichtung nach einem der Ansprüche 1 bis 9, **dadurch gekennzeichnet, dass** ein Sensor (10) für die Temperatur des den Kühler (1) verlassenden Nutzmediums vorgesehen und mit einer Regeleinrichtung für eine Sollwertregelung verbunden ist, welche die Menge des über die Sprüheinrichtungen (7) abgegebenen Kühlmediums steuert.

11. Vorrichtung nach Anspruch 10, **dadurch gekennzeichnet, dass** in der Regeleinrichtung ein Ablauf implementiert ist, der nacheinander die Sprühköpfe (7) bzw. Sprühkopfgruppen (11, 71, 72, 73) aufschaltet, vorzugsweise beginnend mit dem dem Austritt (3) des Nutzmediums aus dem Kühler (1) nächstliegenden Sprühkopf (7) und in Richtung des dem Eintritt des Nutzmediums in den Kühler (1) nächstliegenden Sprühkopfes (7) fortschreitend.

12. Vorrichtung nach Anspruch 10 oder 11, **dadurch gekennzeichnet, dass** zumindest zwei Sprühköpfe (7) oder Sprühkopfgruppen (11) mit unterschiedlicher maximaler Durchflussmenge vorgesehen sind und im Sinn steigender maximaler Durchflussmenge zugeschaltet werden.

13. Vorrichtung nach einem der Ansprüche 10 bis 12, **dadurch gekennzeichnet, dass** in der Regeleinrichtung eine der benötigten Kühlleistung entsprechende Spannung generiert wird, wobei jeder der Sprühköpfe (7) bzw. Sprühkopfgruppen (11) in einem bestimmten Spannungsintervall anspricht, in welchem die Durchflussregeleinrichtung (9, 9a, 9b) dieses Sprühkopfes bzw. dieser Sprühkopfgruppe den Durchfluss proportional der Spannung einstellt.

14. Vorrichtung nach einem der Ansprüche 1 bis 13, **dadurch gekennzeichnet, dass** der Wärmetauscher (1) als Ladeluftkühler zwischen einem allfälligen Verdichter für die Verbrennungsluft einer Verbrennungskraftmaschine, beispielsweise einem Abgasturbolader, und der Verbrennungskraftmaschine angeordnet ist.

## Claims

1. A device for supplying an internal combustion engine on a test bench with at least a cooled utilizable medium, for example combustion air, engine oil, cooling water, etc., comprising at least a cooler (1) for the respective utilizable medium upstream of the internal combustion engine, **characterized in that** the cooler (1) is designed as a heat exchanger having at least one closed line (6) for the utilizable medium, which runs completely separately from all other media, and at least two independently actuatable spray heads (7, 7a) for the cooling medium on the line (6) for the utilizable medium.

2. The device as claimed in claim 1, **characterized in that** at least two spray heads (7a) are combined to form a separately actuatable spray head group (11).

3. The device as claimed in claim 1 or 2, **characterized in that** at least two independently controllable supply lines (8, 81, 82, 83) are provided for the cooling medium, each having at least one connected spray head (7, 7a).

4. The device as claimed in claim 3, **characterized in that** at least two supply lines (8) are combined in a jointly actuatable group of supply lines.

5. The device as claimed in claim 4, **characterized in that** at least two supply lines (8), each having at least one flow control device (9), are provided, and that at least two flow control devices (9a) are combined in a jointly actuatable group of flow control devices.

6. The device as claimed in one of claims 1 or 2, **characterized in that** at least two supply lines (8), each having at least one connected spray head (7), are provided for the cooling medium, wherein each spray head is provided with a flow control device (9b) for the cooling medium.

7. The device as claimed in claim 5 or 6, **characterized in that** flow control devices (9b) are provided, which can be controlled by analog means.

8. The device as claimed in one of claims 5 to 7, **characterized in that** cyclically operating valves, preferably solenoid valves, are provided as the flow control device (9), preferably in the supply lines (8).

9. The device as claimed in one of claims 1 to 8, **characterized in that** all supply lines (8, 81, 82, 83) branch off from a common connector (4) for the cooling medium.

10. The device as claimed in one of claims 1 to 9, **characterized in that** a sensor (10) for the temperature of the utilizable medium leaving the cooler (1) is provided and connected to a control device for a setpoint control which controls the quantity of the cooling medium delivered by the spray devices (7).

11. The device as claimed in claim 10, **characterized in that** a sequence is implemented in the control device which switches the spray heads (7) or spray head groups (11, 71, 72, 73) consecutively, preferably beginning with the spray head (7) closest to the outlet (3) of the utilizable medium from the cooler (1) and continuing in the direction of the spray head (7) closest to the inlet of the utilizable medium to the cooler (1).

12. The device as claimed in claim 10 or 11, **characterized in that** at least two spray heads (7) or spray head groups (11) with different maximum flow rate are provided and are connected in the sense of increasing maximum flow rate.

13. The device as claimed in one of claims 10 to 12, **characterized in that** a voltage corresponding to the required cooling capacity is generated in the control device, wherein each of the spray heads (7) or spray head groups (11) energizes in a defined voltage interval in which the flow control device (9, 9a, 9b) of this spray head or of this spray head group adjusts the flow proportional to the voltage.

14. The device as claimed in one of claims 1 to 13, **characterized in that** the heat exchanger (1) is arranged as a charge air cooler between a possible compressor for the combustion air of an internal combustion engine, for example an exhaust gas turbocharger, and the internal combustion engine.

## Revendications

1. Dispositif pour alimenter un moteur à combustion interne sur un banc d'essai en au moins un fluide utile refroidi, par exemple, en air comburant, huile moteur, eau de refroidissement, etc., comprenant au moins un radiateur (1) pour le fluide utile respectif, placé en avant du moteur à combustion interne, **caractérisé en ce que** le radiateur (1) est réalisé sous la forme d'un échangeur de chaleur comprenant au moins une conduite de fluide utile (6), qui est fermée et entièrement séparée de tous les autres fluides, et au moins deux têtes de pulvérisation (7, 7a) pouvant être commandées indépendamment, pour le fluide de refroidissement sur la conduite de fluide utile (6).

2. Dispositif selon la revendication 1, **caractérisé en ce qu'**au moins deux têtes de pulvérisation (7a) sont réunies en un groupe de têtes de pulvérisation (11) qui peut être commandé séparément.

3. Dispositif selon l'une des revendications 1 ou 2, **caractérisé en ce qu'**il comporte au moins deux conduites d'alimentation réglables indépendamment (8, 81, 82, 83) pour le fluide de refroidissement, raccordées chacune à au moins une tête de pulvérisation (7, 7a).

4. Dispositif selon la revendication 3, **caractérisé en ce qu'**au moins deux conduites d'alimentation (8) sont réunies en un groupe à commande commune de conduites d'alimentation.

5. Dispositif selon la revendication 4, **caractérisé en ce qu'**au moins deux conduites d'alimentation (8) sont équipées chacune d'au moins un dispositif de réglage du débit (9) et **en ce qu'**au moins deux dispositifs de réglage du débit (9a) sont réunis en un groupe à commande commune de dispositifs de réglage du débit.

6. Dispositif selon l'une des revendications 1 ou 2, **caractérisé en ce qu'**il comporte au moins deux conduites d'alimentation en fluide de refroidissement (8) à chacune desquelles est raccordée au moins une tête de pulvérisation (7), chaque tête de pulvérisation étant munie d'au moins un dispositif de réglage du débit (9b) pour le fluide de refroidissement.

7. Dispositif selon l'une des revendications 5 ou 6, **caractérisé en ce qu'**il comporte des dispositifs de réglage du débit (9b) à réglage analogique.

8. Dispositif selon l'une des revendications 5 à 7, **caractérisé en ce qu'**il comporte des soupapes cadencées, de préférence des soupapes magnétiques, servant de dispositif de réglage du débit (9), de préférence montées dans les conduites d'alimentation (8).

9. Dispositif selon l'une des revendications 1 à 8, **caractérisé en ce que** toutes les conduites d'alimentation (8, 81, 82, 83) sont branchées sur un raccord de fluide de refroidissement commun (4).

10. Dispositif selon l'une des revendications 1 à 9, **caractérisé en ce qu'**il comporte un capteur (10) pour la température du fluide utile sortant du radiateur (1), qui est connecté à un dispositif de réglage servant pour le réglage d'une valeur de consigne, qui commande la quantité du fluide de refroidissement débitée par les dispositifs de pulvérisation (7).

11. Dispositif selon la revendication 10, **caractérisé en ce que**, dans le dispositif de réglage, est monté un écoulement qui met en marche l'un après l'autre les têtes de pulvérisation (7) ou groupes de têtes de pulvérisation (11, 71, 72, 73), de préférence en commençant par la tête de pulvérisation (7) qui est la plus rapprochée de la sortie (3) du fluide utile sortant du radiateur (1), et en continuant en direction de la tête de pulvérisation (7) qui est la plus rapprochée de l'entrée du fluide utile dans le radiateur (1).

12. Dispositif selon l'une des revendications 10 ou 11, **caractérisé en ce qu'**il comporte au moins deux têtes de pulvérisation (7) ou groupes de têtes de pulvérisation (11) ayant des débits maxima différents et raccordés dans le sens des débits maxima croissants.

13. Dispositif selon l'une des revendications 10 à 12, **caractérisé en ce que**, dans le dispositif de réglage, est générée une tension correspondant à la puissance de refroidissement nécessaire, chacune des têtes de pulvérisation (7) ou chacun des groupes de têtes de pulvérisation (11) répondant dans un intervalle de tension déterminé, le dispositif de réglage du débit (9, 9a, 9b) de cette tête de pulvérisation ou de ce groupe de têtes de pulvérisation réglant le débit proportionnellement à la tension.

14. Dispositif selon l'une des revendications 1 à 13, **caractérisé en ce que** l'échangeur de chaleur (1) est disposé, en qualité de refroidisseur de l'air de charge, entre un compresseur éventuel utilisé pour l'air comburant d'un moteur à combustion interne et qui est par exemple le turbocompresseur sur gaz d'échappement, et le moteur à combustion interne.
